(19) Europäisches Patentamt
European Patent Office
Office européen des brevets

(11) **EP 4 481 740 A1**

(12) **EUROPEAN PATENT APPLICATION**

(43) Date of publication:
**25.12.2024 Bulletin 2024/52**

(21) Application number: **23180108.5**

(22) Date of filing: **19.06.2023**

(51) International Patent Classification (IPC):
**G10L 25/30** (2013.01) **G06N 3/0455** (2023.01)
**G10L 21/0208** (2013.01)

(52) Cooperative Patent Classification (CPC):
**G10L 25/30; G06N 3/0455; G06N 3/09;**
**G10L 21/0208;** G06N 3/0475

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ai-coustics UG**
**13355 Berlin (DE)**

(72) Inventors:
• **JANKE, Tim**
**13355 Berlin (DE)**
• **JAEDICKE, Corvin**
**13355 Berlin (DE)**
• **SEIPEL, Fabian**
**13355 Berlin (DE)**

(74) Representative: **Vossius & Partner**
**Patentanwälte Rechtsanwälte mbB**
**Siebertstraße 3**
**81675 München (DE)**

(54) **METHOD FOR SPEECH ENHANCEMENT**

(57)     There is provided a method for speech enhancement of a digital audio signal, wherein the input digital audio signal is in a digital waveform representation, the method comprising the steps of: a) based on a first trained artificial intelligence, AI, model creating a denoised digital audio signal in the waveform representation by removing energy from the input digital audio signal; b) based on a second trained AI model mapping the denoised digital audio signal in the waveform representation into a lower dimensional signal representation; c) based on a third trained AI model determining an enhanced digital audio signal in the lower dimensional signal representation such that the perceptual quality of the voice is elevated; and d) based on the second trained AI model mapping the enhanced digital audio signal in the lower dimensional signal representation back to the waveform representation; wherein each of the first, second, and third trained AI model is based on a respective AI model comprising a plurality of model parameters which are determined based on a training process.

**Fig. 2**

EP 4 481 740 A1

**Description**

The present invention relates to a data processing system and method for speech enhancement of a digital audio signal as well as methods for training artificial intelligence models for speech enhancement.

Embodiments of the present invention may relate to a software system that performs holistic speech enhancement using neural networks.

The term holistic speech enhancement refers to the capability of the system to compensate for a large number and combinations of distortions that deteriorate the quality of digital recordings of natural speech. The system according to the present disclosure may use a plurality of sub-models, preferably a sequence of sub-models, which are designed to handle different sub-tasks of speech enhancement.

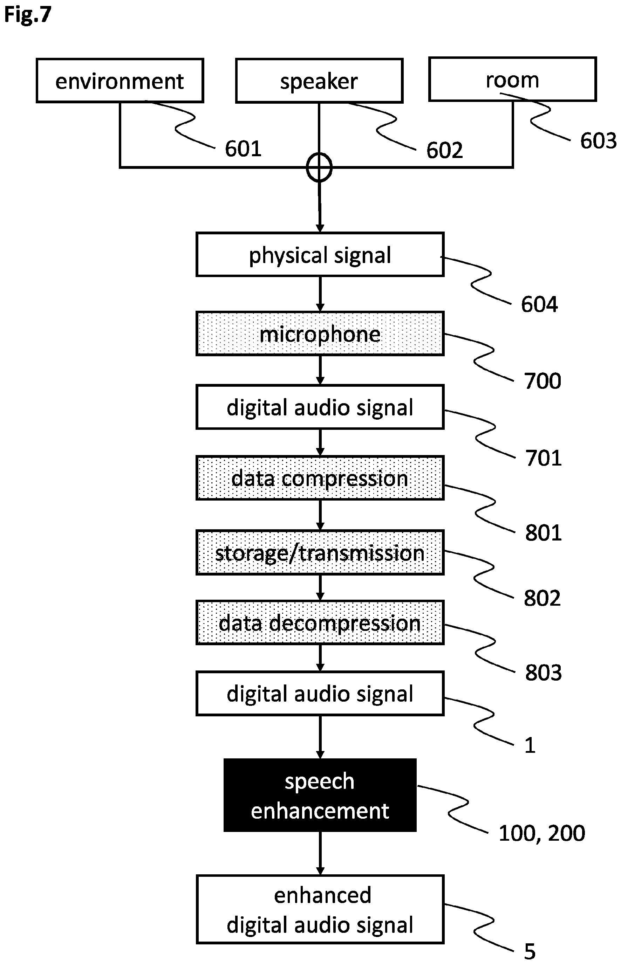

When natural speech is digitally recorded and transmitted from a sender to a receiver, the original speech signal is subjected to many effects that deteriorate the quality and intelligibility at the receiver's end, cf. Fig. 7.

These effects can be background noise, e.g., traffic, people talking, keyboards clicking, or dogs barking; room reverberation; poor hardware, especially cheap microphones; artefacts from data compression and decompression of the digital signal with different codecs, e.g., mp3, opus, or ogg; or packet loss during transmission. Usually some or many of these effects will appear together.

High quality, digital audio data is high-dimensional. The data usually comes in sample rates of 16 kHz, 22.05 kHz, 24 kHz, 44.1 kHz, or 48 kHz. That is, a second of audio signal may be represented as a digital waveform vector containing up to 48000 single values.

Classic solutions to improve the quality at the receiver end typically rely on light-weight algorithms derived from signal processing theory, which can run fast even on low-resource hardware. However, these algorithms are therefore also limited in their potential performance.

In recent years, many algorithms based on machine learning approaches, especially deep neural networks, have been developed. Such systems rely on neural networks with millions of parameters.

These systems are therefore potentially more powerful. Because of the high dimensionality of the data and the size of the models, such systems require very powerful hardware for their training process and, to a lesser extent, also for the inference process.

Furthermore, such models require large scale training data sets to perform well. The need for training data usually increases with the parameter count of the neural network. Building a model that directly operates on the high dimensional wave form input thus results in a model with a very large number of parameters.

Using more compact, compressed signal representations can reduce the dimensionality of the problem resulting in a reduced computational burden. However, this compression comes with the cost of losing some information of the original uncompressed signal.

Another way to reduce the need for large scale training data is to build artificial intelligence, AI, models with strong inductive biases, i.e., designing the model based on strong assumptions about the prediction problem. Strong inductive biases may increase the training data efficiency, if the assumptions are accurate enough but may also limit or hurt model performance, if they are not.

Thus, it is an object of the present disclosure to provide a method and system for speech enhancement of a digital audio signal, which solves the above problems. The present disclosure is set out in the appended set of claims. Any references in the following description to embodiments, objects, aspects and/or examples which are not covered by the appended claims are considered as not being part of the present disclosure.

In the field of artificial intelligence often varying terms and definitions are used. For the present disclosure the typical definition as used by the skilled person is assumed, unless stated otherwise.

For the purpose of this disclosure the term artificial intelligence, AI, is used to refer to a data processing system which is configured to receive an input and then generate an output based on said input.

The term artificial intelligence may be ambiguous, therefore for the purpose of a precise description of an actual embodiment, the terms of an implementation of an AI are used to describe the present disclosure and its features.

One implementation of an AI is a neural network. The term neural network (also artificial neural network, deep neural network, neural net) refers to a of class of mathematical algorithms implemented on a computer.

A neural network takes one or more numerical arrays as inputs and outputs one or more numerical arrays. Its purpose is to approximate complex non-linear functions.

To this end, the neural network uses a cascade of linear matrix multiplications and simple, analytical non-linear functions. The elements of the matrices of a neural network are called parameters or weights.

The arrangement of cascade of the matrix multiplications and simple non-linear functions is referred to as model architecture. The model architecture may be characterized based on a plurality of predetermined parameters, such as number of layers, number of parameters per layer, activation functions, and types of layers.

The mere definition of a model architecture does not provide an operable neural network. When using neural networks in practice, the neural network parameters are initialized with random numerical values. The desired mathematical function is "learned" by incrementally adjusting the values of the parameters of the neural network based on how well the neural network can, on average, approximate a desired output given a corresponding input. This process is referred to as training of the neural network.

For the training input-output pairs of numerical arrays referred to as training data are used. The quality of the function approximation is measured by a "loss function" or "cost function". The desired output is defined as ground truth.

In the context of the present disclosure, an operable model is an instance of a neural network, i.e., a model is a neural network with a concrete architecture and trained set of parameters. Each operable model might be trained with a specific loss function and data set. The terms model, trained model, and operable model may be used synonymous.

When referring to a subtractive model in this description the model, by design, can only subtract energy from a signal input, i.e., it can only reduce intensity and thus energy.

In terms of a digital audio signal the subtractive model may only reduce the volume of the audio. In context of the present disclosure the operative model should not reduce the loudness of the original speech but making parts where only background noise is present completely quiet.

More formerly, let $x \in \mathbb{C}^{T \times F}$ be the noisy complex spectrogram and $f$ the neural network. The neural network $f$ takes $x$ as input and outputs a mask m of with the same shape as $x$ but the neural network output is restricted to the range [0,1], i.e., $m \in [0,1]^{T \times F}$. This mask is pointwise multiplied with $x$ to obtain the output spectrogram y = $m \odot x = f(x) \odot x$.

In contrast to a subtractive model a generative model may, by design, add energy to the input signal. The model has a more general form.

Let x be the encoded representation of the low-quality speech signal the neural network g outputs the predicted latent representation $y = g(x)$. Hence the model output is in general not restricted by the contents present in the input x.

An autoencoder is a neural network model that consists of two sub-models, the encoder e sub-model and the decoder d sub-model.

Given an original $D_y$-dimensional signal $y \in \mathbb{R}^{D_y}$, e.g., when y is a second of 48 kHz audio we have $D_y$ = 48000, the model maps the input y to another vector z with lower dimensionality using the encoder: $z = e(y)$ where $z \in \mathbb{R}^{D_z}$ and $D_z << D_y$, e.g., $D_z$ = 12000.

Then, the decoder maps back to the original input size $D_y$, i.e., $x = d(z)$ with $x \in \mathbb{R}^{D_y}$. The autoencoder model is trained in an end-to-end fashion, i.e., the encoder and decoder are trained together, with the goal to make y « x. A perfect model has $x = y$, i.e., perfect reconstruction.

In practice, the autoencoder as used in the present disclosure is configured to obtain a low latent dimensionality $D_z$ while maintaining a low reconstruction error. For inference, the encoder and decoder model can be separated and used different positions in the system.

The present disclosure also refers to a dimensionality of a signal. At a sample rate of, e.g., 48000 Hz, an audio file contains 48000 samples per second, i.e., one would have to pass a vector of dimension 48000x1 through the neural network.

An encoder sub-model may compress the information stored in this vector to a lower-dimensional representation, e.g., the encoder takes the vector of size 48000x1 as input and outputs a matrix of dimension 100x128. This matrix has only 12800 entries, i.e., this reduces the size by a factor of 4 (while hopefully keeping most of the information stored in the original vector).

Thus, a "lower-dimensional" representation in the present disclosure refers to a reduction of roughly 2-fold to 10-fold compared to the original size of the signal. The exact ratio needs to be chosen when designing the model.

According to an aspect of the present disclosure, there is provided a method for speech enhancement of a digital audio signal, wherein the input digital audio signal is in a digital waveform representation, the method comprising the steps of:

    a) based on a first trained artificial intelligence, AI, model creating a denoised digital audio signal in the waveform representation by removing energy from the input digital audio signal;

    b) based on a second trained AI model mapping the denoised digital audio signal in the waveform representation into a lower dimensional signal representation;

    c) based on a third trained AI model determining an enhanced digital audio signal in the lower dimensional signal representation such that the perceptual quality of the voice is elevated; and

    d) based on the second trained AI model mapping the enhanced digital audio signal in the lower dimensional signal representation back to the waveform representation;

    wherein each of the first, second, and third trained AI model is based on a respective AI model comprising a plurality of model parameters which are determined based on a training process.

According to an embodiment of the present disclosure, the first AI model is a neural network based on a subtractive model configured to remove energy from the signal and preferably trained to remove unwanted noise.

According to an embodiment of the present disclosure, in step a) the waveform representation is converted to a complex spectrogram using several overlapping frames on which Fourier coefficients are computed; wherein the complex spectrogram is input for the first trained AI model; wherein the first trained AI model is configured to output a mask with the same dimensionality as the complex spectrogram;

wherein the mask is multiplied elementwise with the complex spectrogram to obtain a denoised complex spectrogram; and wherein the denoised digital audio signal in the waveform representation is obtained by applying inverse Fourier transformations on the time frames of the denoised complex spectrogram.

According to an embodiment of the present disclosure, the mask contains only values greater than 0 and smaller than 1.

According to an embodiment of the present disclosure, the second trained AI model is a neural network based on an autoencoder model comprising an encoding sub-model and a decoding sub-model and configured to be trained to encode the input into a lower dimensional output and decode a lower dimensional input to a higher dimensional output.

According to an embodiment of the present disclosure, in step b) according to the above aspect the denoised digital audio signal in the waveform representation is mapped to the lower dimensional representation via the encoder sub-model of the second trained AI; and wherein in step d) according to the above aspect the enhanced digital audio signal in the waveform representation is obtained via the decoder sub-model of the second trained AI.

According to an embodiment of the present disclosure, the third trained AI model is a neural network based on a generative model and configured to add energy.

According to an embodiment of the present disclosure, the first AI model is configured to use both the waveform representation and the complex spectrogram as input to estimate the mask, and wherein the mask is applied to the waveform representation or the complex spectrogram.

According to an aspect of the present disclosure, there is provided a method for training a first AI model for a method according to any one of the preceding aspects and embodiments;

wherein training data is generated based on a random combination of a clean speech data set, a noise data-set, and one or more algorithmic distortions configured to simulate real-world distortions;
wherein the ground truth data comprises the clean speech data with one or more algorithmic distortions;
wherein the neural network model is configured to calculate a prediction based on the clean speech with one or more algorithmic distortions and noise for the clean speech with one or more algorithmic distortions without noise; and
wherein the loss between the prediction and the ground truth is computed and model parameters are updated based on the value of the loss.

According to an aspect of the present disclosure, there is provided a method for training a second AI model for a method according to any one of the preceding aspects and embodiments;

wherein training data is generated based on a random combination of a clean speech data set, a noise data-set, and one or more algorithmic distortions configured to simulate real-world distortions;
wherein the neural network is based on an autoencoder model comprising an encoder sub-model and decoder sub-model and has a bottleneck layer with a lower dimensionality than the input digital audio signal in the waveform representation;
wherein ground truth data comprises clean speech, noise and one or more algorithmic distortions;
wherein the loss is computed between the autoencoder output and the ground truth data; and
wherein the model parameters of the encoder sub-model and the decoder sub-model are updated based on the value of the loss.

According to an aspect of the present disclosure, there is provided a method for training a third AI model for a method according to any one of the preceding aspects and embodiments;

wherein training data is generated based on a random combination of a clean speech data set, a noise data-set, and one or more algorithmic distortions configured to simulate real-world distortions;
wherein the ground truth comprises the clean speech data;
wherein before the training data is used as input to the third AI model, it is passed through a trained first AI model;
wherein the output of the first AI model is then used as the input to the encoder sub-model of the second trained AI model;
wherein based on the encoder sub-model output the third AI model is configured to calculate an enhanced digital audio signal, which is then decoded to the waveform representation via the decoder sub-model of the second trained AI model.
wherein the loss is computed between the decoded prediction and the ground truth, and the model parameters of the third AI model are updated based on the value of the loss.

According to an aspect of the present disclosure, there is provided a trained artificial intelligence, AI, model,

wherein the model parameters have been determined based on the steps of any one of the preceding aspects and embodiments; and/or,
wherein the trained AI model is configured to be one of a first, second, or third AI model according to any one of the preceding aspects and embodiments.

According to an aspect of the present disclosure, there is provided a data processing system comprising means for carrying out the steps of the method according to any one of the preceding aspects and embodiments.

According to an aspect of the present disclosure, there is provided a computer program comprising instructions which, when the program is executed by a computer, cause the computer to carry out the steps of the method according to any one of the preceding aspects and embodiments.

According to an aspect of the present disclosure, there is provided a computer-readable medium comprising instructions which, when executed by a computer, cause the computer to carry out the steps of the method according to any one of the preceding aspects and embodiments.

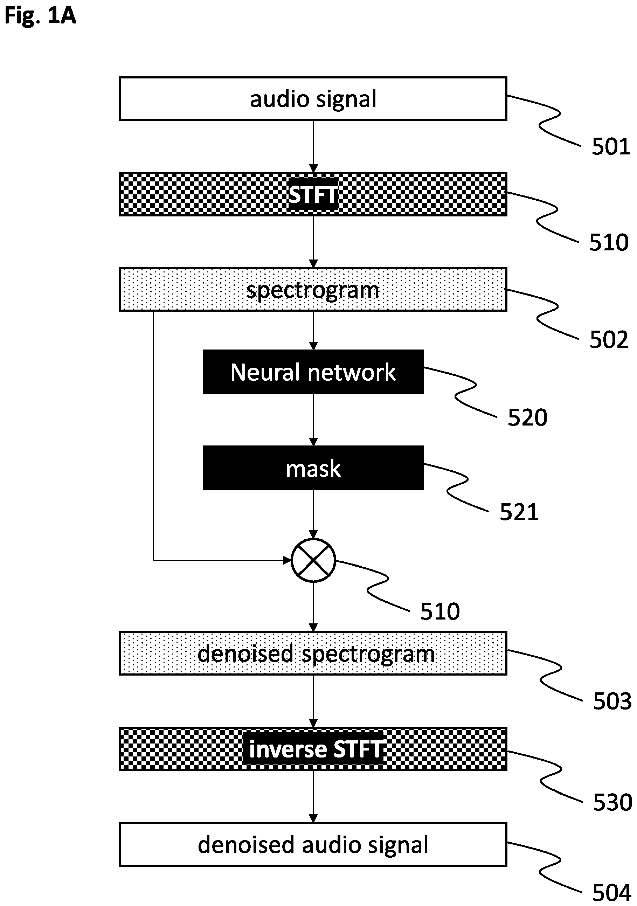

Figs. 1A to 1C illustrate the prior art speech enhancement solutions. In the prior art, speech enhancement is either discussed as individual subproblems, e.g., source separation, noise suppression, bandwidth extension, packet loss concealment, dereverberation, etc., or simply referred to as speech enhancement.

In https://arxiv.org/abs/2206.03065 a "universal speech enhancement" system is proposed that also targets many disturbances.

Classic algorithms rely on lightweight signal processing algorithms and are not capable to produce high quality speech enhancement. Modern systems are usually built on neural networks. Said neural networks usually operate on spectrograms or compressed representations like Mel spectrograms. There are also some neural network-based approaches operating on the wave form of the input signal. An Example of such a prior art speech enhancement is shown in Fig. 1A.

Models operating on Mel spectrograms or on other lossy compressed signal representations usually require additional models to map the compressed representations back to the wave form.

Models operating on the raw wave form are usually more compute intensive.

Furthermore, most methods only tackle a single or very few distortions, e.g., they tackle only the denoising or only the bandwidth extension task.

In other words, state of the art systems perform only certain single tasks, e.g., only removing background noise or reverb.

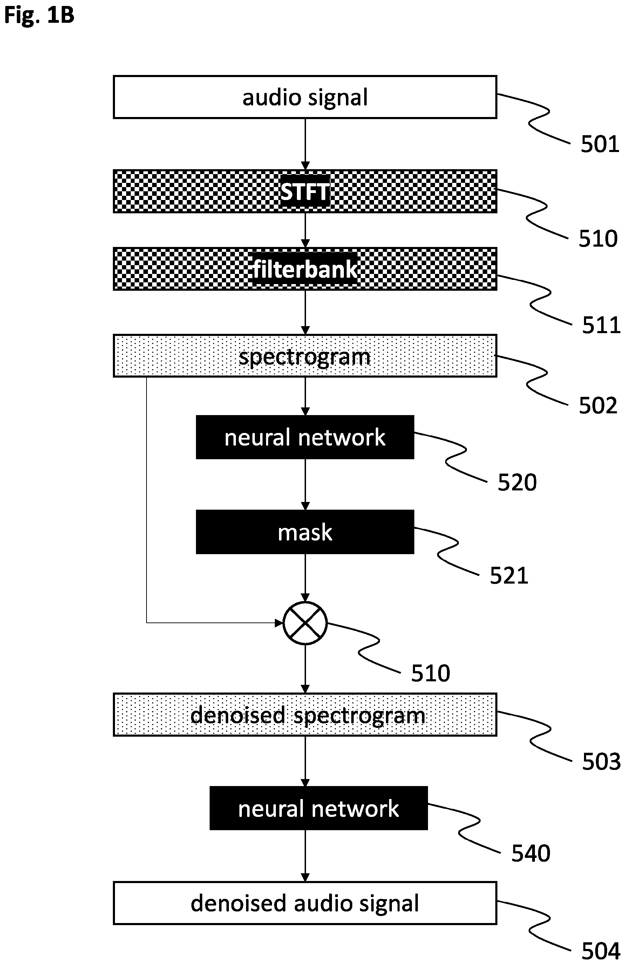

Many of these systems operate on the complex spectrograms (see Fig. 1A) or on magnitude spectrograms which are optionally further compressed by applying a filter bank (see Figure 1B). Conditional on the input, neural network models may estimate a mask which is multiplied with the input spectrogram to reduce the energy in certain time-frequency bins.

Applying a filter bank to the magnitude of the spectrogram allows to reduce the dimensionality of the signal and incorporate domain knowledge. However, it is then necessary to train a separate neural network, called a vocoder, to map from the filtered spectrogram back to the wave form.

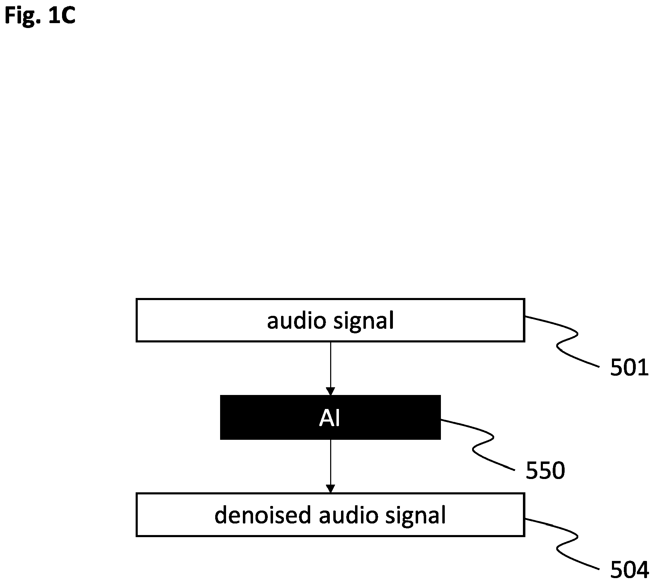

An exception is the approach in https://arxiv.org/abs/2206.03065. This system operates directly on the wave form signal and uses a single neural network-based diffusion model for the enhancement task. This is shown in Fig. 1C.

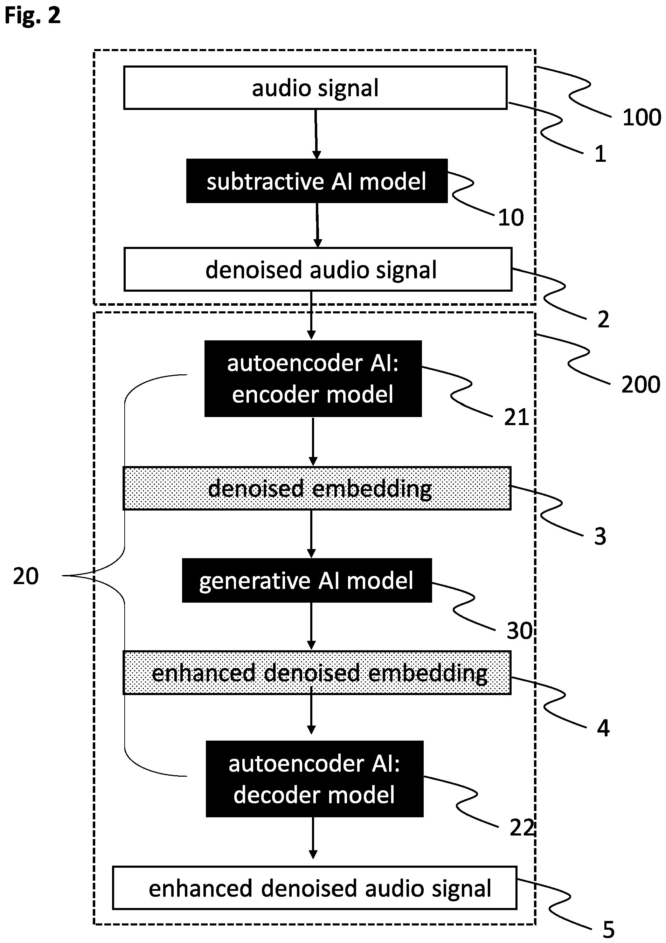

The core concept of the present disclosure is to use a method and/or system comprising of three sequentially applied deep neural networks to perform holistic speech enhancement, i.e., the model will take a digital audio file as input and will output an audio file with an improved quality. Fig. 2 shows a block-flow-diagram of a first embodiment of a speech enhancement method according to the present disclosure.

In the first stage 100 a digital audio signal 1, hereinafter also referred to as audio signal, is input to a first trained AI 10. The first trained AI, i.e., an operable model 10 is a neural network based on a subtractive model and trained to removed noise from the input signal. The first trained AI 10 outputs a denoised audio signal 2. The training of the first AI will be described below.

The output of the first trained AI is the output of the first stage 100 and the input to the second stage 200.

In the second stage 200 the input signal is embedded to a lower dimensional representation based on the second trained AI 20. The second trained AI 21 is a neural network based on an autoencoder model. That is, the second trained AI 20 has two sub models: an encoder sub-model configured to decrease the dimensionality of the input and a decoder sub-model configured to increase the dimensionality again. As detailed below, both sub-models are trained together.

In the second stage 200 first the input is embedded into the lower dimensional representation 3 via use of the encoder sub-model 21 of the second trained AI 20.

The output of the encoder sub-model 21 is also referred to as a denoised embedding 3. The denoised embedding is input to the third trained AI 30.

The third trained AI 30 is a neural network based on a generative model. The third AI 30 is trained to enhance speech in the denoised embedding 3. The output of the third trained AI is an enhanced denoised embedding 4. Training of the third trained AI 30 will be described below.

The enhanced denoised embedding 4 is input to the second trained AI 20 again to obtain an enhanced denoised audio signal 5. The enhanced denoised audio signal 5 is obtained from the decoder sub-model 22 of the second trained AI 20.

As detailed above, the present disclosure is based on three different trained AI models. The basis for the training according to the present disclosure is a collection of high quality, clean speech examples, i.e., these examples do not contain background noise and have a high perceptual sound quality and speech intelligibility.

Additionally, a collection of background noise examples and/or a set of impulse response functions is required to create training data.

Creating the training data means to create pairs of data with one data comprising examples of degraded quality and data comprising the corresponding original, high-quality example.

To mimic the real-world effects that degrade the quality, according to the present disclosure simulated effects are applied to the original signal at random.

These effects are also referred to as distortions. In some cases, some of the effects will be applied also to the clean audio, i.e., they will also be present in the ground truth example. In this case, the effects may be referred to as augmentations.

According to the present disclosure the process for creating a single pair of examples for the training data set comprises the steps:

a) Randomly draw a high-quality example
b) Randomly draw an example from the noise collection
c) Add the background noise to the clean speech sample whereby the loudness of each example is chosen at random in predefined limits.
d) With a predefined probability simulate room reverberation using a randomly drawn impulse response
e) With a predefined probability apply equalization to the signal
f) With predefined probability apply band limiting to the signal
g) With a predefined probability simulate compression and transmission artifacts

In general, the creation of the training data is not restricted to the mentioned distortions. One could choose to apply less or more distortions. Also, the order in which the distortions are applied could be changed or randomized.

As will be detailed below, the different neural networks may be trained according to the present disclosure with differently generated training data.

The basis for model training according to the present disclosure is a data set of clean, high quality speech examples, a data set of background noise examples, and a set of algorithmic distortions that resemble the real-world deteriorations as mentioned above.

During training, the background noise is added to the clean speech at random and distortions are applied to the signal in a random manner to mimic the real-world signal chain.

The model training is carried out in a stage-wise manner and matches the respective models' inductive biases and tasks. Especially, the subtractive model and autoencoder model are trained in a stand-alone fashion.

It is a core concept of the disclosure, that a two-stage system of noise removal and speech enhancement is formed with a separation of sub-problems between the three neural network models.

It is essential that the first stage model is designed and trained in a way that it removes unwanted parts of the signal and that the generative model is designed and trained in a way such that it acts as the subsequent enhancement model which predicts the parts of the signal that are lost.

Furthermore, the generative model operates on a lower dimensional latent representation learned by the autoencoder model. The autoencoder is trained such that it encodes and reconstructs the original wave form signal using a latent representation that has a lower dimensionality than the original audio wave form.

Because especially AI models that perform enhancement require high parameter counts and a computationally expensive inference pass, it is beneficial to operate the enhancement on a compressed signal representation.

This results in smaller memory requirements and a lower computational burden.

According to a further core concept of the disclosure, it is possible to use only the first stage of the system if the user is only interested in denoising the input signal. This will result in a faster and computational less expensive inference.

The embodiments of the present disclosure have several advantages for both model design and model training.

First, the separation of concerns between the models allows to create inductive biases for each model that suit their purpose in the enhancement process. This results in a reduced need for training data to reach the same level of performance.

Second, the embodiments of the present disclosure allow for a straightforward pretraining for the subtractive and autoencoder model. The training of the subtractive model can be done independently from the other two models since it is the first model in the chain. This decreases the computational burden. The autoencoder can also be trained stand alone as it only is supposed to learn a compressed representation for general wave form audio signal. This means that it can be pretrained on a much larger general audio data set, not only on data sets of clean speech samples which are usually smaller in size.

Third, the enhancement model can only be trained after the first stage model and the autoencoder are trained sufficiently. However, the design allows to freeze the weights of the pre-trained subtractive model and auto-encoder which reduces the computational burden in training.

Fourth using a lower-dimensional representation for the generative stage, i.e., the second stage, results in a smaller model size for the generative model which reduces computational burden in training. As the size of the embedding space can be chosen as a hyperparameter, one can actively balance the size of generative model against compression and reconstruction capabilities.

## BRIEF DESCRIPTION OF THE DRAWINGS

Embodiments of the present disclosure will now be described by way of example only and with reference to the following accompanying drawings, in which

Fig. 1A    shows a first block-flow-diagram of a state of the art speech enhancement;

Fig. 1B    shows a second block-flow-diagram of a state of the art speech enhancement;

Fig. 1C    shows a third block-flow-diagram of a state of the art speech enhancement;

Fig. 2     shows a block-flow-diagram of a first embodiment of a speech enhancement according to the present disclosure;

Fig. 3     shows a detailed block-flow-diagram of a first stage of the first embodiment of a speech enhancement according to the present disclosure;

Fig. 4     shows the training of a first artificial intelligence model according to an embodiment of the present disclosure;

Fig. 5     shows the training of a second artificial intelligence model according to an embodiment of the present disclosure;

Fig. 6A    shows the training of a third artificial intelligence model according to an embodiment of the present disclosure, which is continued in Fig. 6B;

Fig. 6B    shows the training of a third artificial intelligence model according to an embodiment of the present disclosure, which is continued from Fig. 6A; and

Fig. 7     shows a flow chart of a speech enhancement according to the present disclosure.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like members throughout the description.

It is a further core concept of the present disclosure, that in the first stage the subtractive neural network removes unwanted parts of the signal, e.g., background noise and room reverberation. By design, this model is only capable of removing parts from the input signal.

It is a further core concept of the present disclosure, that in the second stage the signal is enhanced by the generative neural network such that the perceptual quality of the voice is elevated.

The second stage operates on the lower dimensional signal representation provided by the autoencoder. Therefore, the previously denoised wave form signal is mapped to the embedding space of the autoencoder using the encoder part of the autoencoder.

The generative model takes this encoded signal as input and outputs the enhanced encoded signal. Then the decoder part of the autoencoder is used to map the enhanced signal back to the wave form representation.

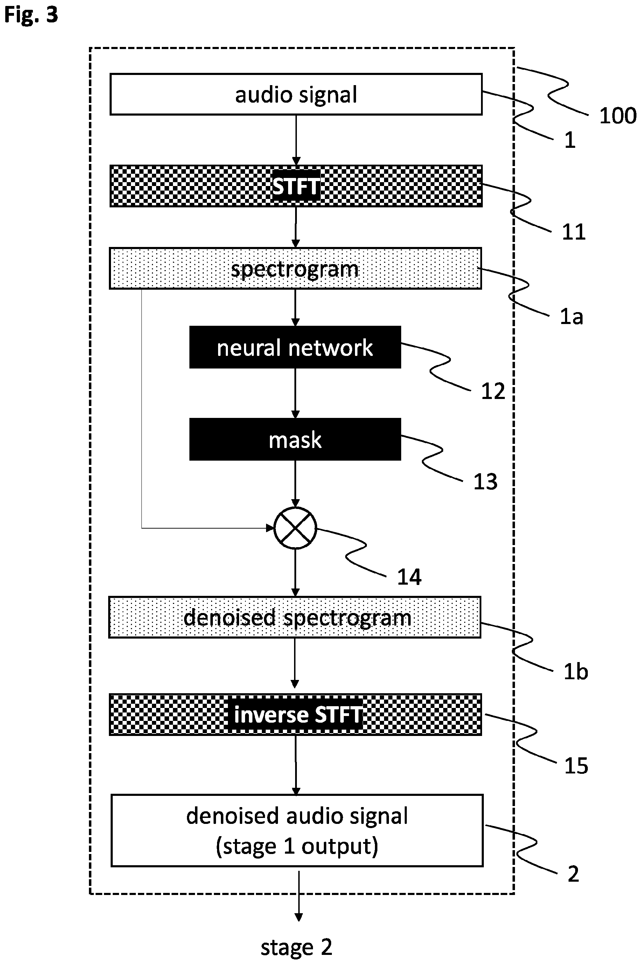

Fig. 3 shows a detailed block diagram of the first stage 100 according to an embodiment for the present disclosure. The input to the first stage 100 is a digital audio signal 1. As detailed above, the first stage serves to remove noise from the digital audio signal 1 and to output a denoised audio signal 2.

In a preferred embodiment the first stage 100 is based on an AI based filtering in a frequency space. The frequency space representation of the signal is preferably obtained by a Short Term Fourier transform (STFT).

However, other transformations into a frequency space may be used, e.g., wavelet transforms.

In detail, in the first stage 100 a spectrogram 1a of the audio signal 1 is obtained via a Fourier transformation, preferably a STFT 11. The spectrogram 1a is then input to the trained neural network 12 of the first trained AI 10. The trained neural network 12 outputs a mask 13.

In other words, in the first stage 100 the wave form signal is converted to a complex spectrogram using several overlapping frames on which Fourier coefficients are computed. This transforms the one dimensional real-valued wave form signal into a complex-valued two-dimensional matrix with a time and a frequency component which is called the complex spectrogram.

The complex spectrogram is used as the input for a neural network. The output of the neural network is a mask. This mask is a matrix of the same dimensionality as the complex spectrogram.

The mask 13 contains elements between 0 and 1, i.e., is suitable to remove energy from the spectrogram. The mask 13 is then convoluted, preferably multiplied 14, with the spectrogram to obtain a denoised spectrogram 1b.

In other words, the mask is multiplied elementwise with the complex spectrogram, the result is a denoised complex spectrogram. Through appropriate activation functions in the output layer, e.g., a sigmoid function, it is ensured that the mask contains only values greater than 0 and smaller than 1.

Hence, the subtractive model 10 can only reduce the energy in certain time-frequency bins. By applying inverse Fourier transformations on the time frames of the enhanced complex spectrogram one obtains the denoised signal in the waveform representation.

Subsequently the denoised spectrogram 1b is transformed back into the time space of the audio signal. The back-transformation is based on the corresponding inverse transformation from frequency to time representation, preferably on an inverse STFT 15.

The inverse STFT 15 of the denoised spectrogram 1b outputs a denoised audio signal 2. The denoised audio signal 2 is the output of the first stage 100.

The processing is continued in the second stage 200 as detailed above with respect to Fig. 2. That is, the denoised waveform signal is then used as input for the second stage. First, the wave form representation of the denoised signal is mapped to a lower dimensional representation via the encoder part of the autoencoder. This lower dimensional representation is then used as the input to the generative neural network. This model outputs an enhanced signal with the same dimension as the input. By passing the model output through the decoder of the autoencoder the enhanced signal is obtained as a waveform.

As detailed above, the training of the subtractive model 10, the autoencoder 20, and the generative model 30 transforms a generally suitable but untrained neural network into an operable AI model. A trained neural network is characterized by a trained set of parameters of the model representing the outcome of a training.

The basis for model training is a data set of clean speech examples and a data set of noise examples. Additionally, a set of algorithmic distortions that simulate real-world distortions is necessary.

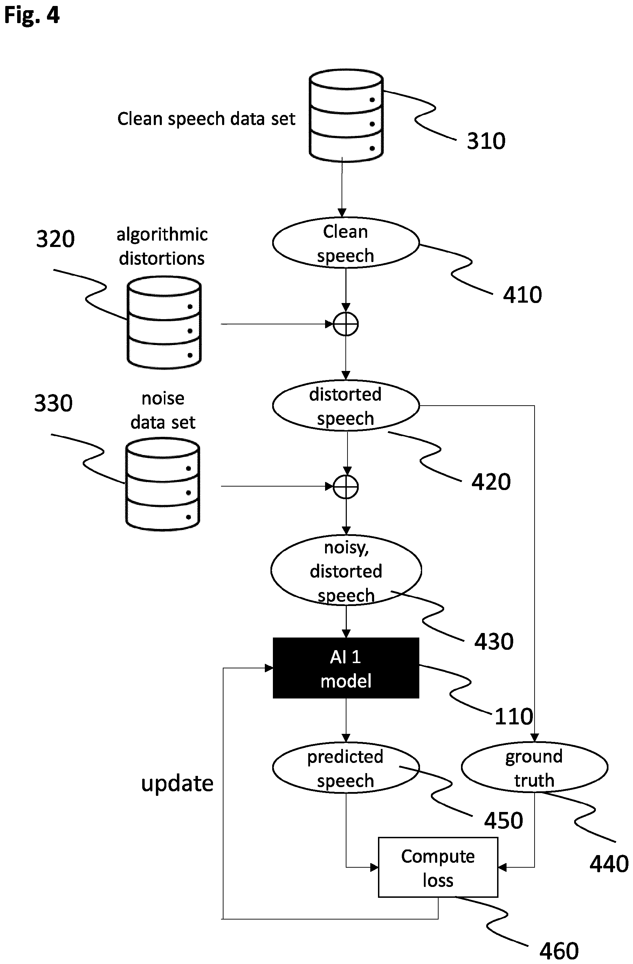

In general speech 310, noise 330, and distortions 320 (see Fig. 4) are combined in a random manner in each training step. However, depending on the task and capabilities of the respective model, the training pipeline is configured differently, i.e., clean speech examples, background noise examples, and distortions are used in a different way.

Fig. 4 depicts the training process for the subtractive model 110 used to obtain the first trained AI 10 as used in the first stage 100. According to the present disclosure, the AI model 10 is supposed to only learn to suppress the background noise in the signal, and not to heal the other distortions.

Therefore, the algorithmic distortions 320 are treated as data augmentations, i.e., they are contained in the ground truth examples 440.

According to an embodiment of the present disclosure the process for creating a single pair of examples for the training data set comprises the steps:

    a) Randomly draw a high-quality example 410 from the clean speech data set 310;
    b) Randomly draw one or more algorithmic distortions from the data set 320 and apply these to the clean speech 410 to obtain the distorted speech 420, in particular one or more of:

        i. simulate room reverberation with a predefined probability,
        ii. apply equalization to the signal with a predefined probability,
        iii. apply band limiting to the signal with a predefined probability, and
        iv. simulate compression and transmission artifacts with a predefined probability;

    c) Randomly draw an example from the noise collection 320
    d) Add the background noise to the clean speech sample whereby the loudness of each example is chosen at random in predefined limits to obtain the noisy distorted speech 430; and
    e) define distorted speech 420 as ground truth 440.

Based on the noisy distorted speech 430, the model 110 produces a prediction 450 for the distorted speech without background noise.

Then the loss between the prediction 450 and the ground truth 440 is computed 460 and the model parameters of the model 110 are updated based on the value of the loss.

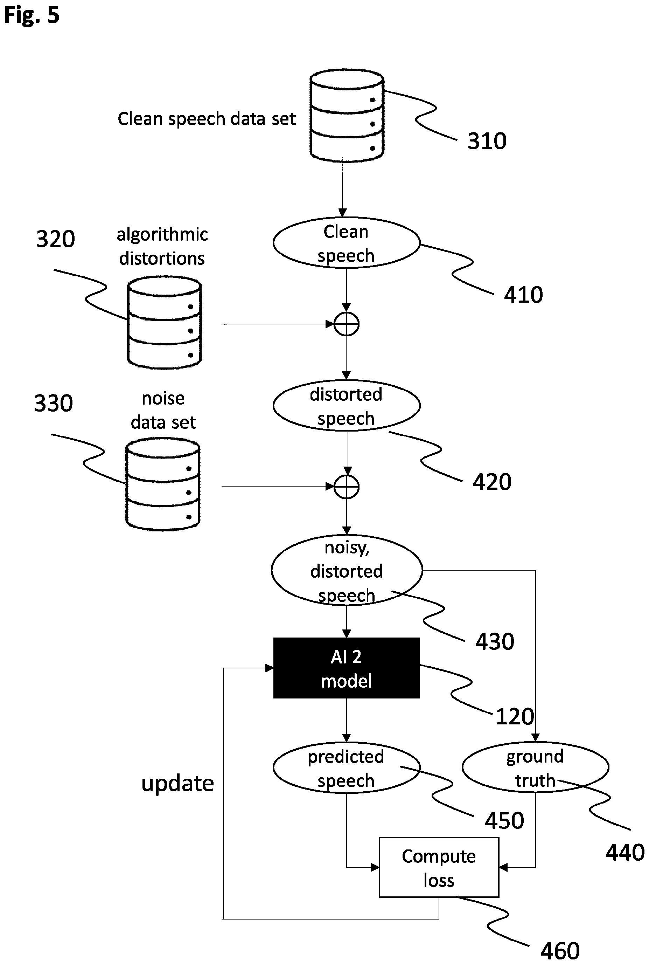

Fig. 5 depicts the training process for the autoencoder model 120 used to obtain a second trained AI 20 as used in the second stage 200. The autoencoder's purpose is to learn a lower dimensional representation of a waveform audio signal. The autoencoder model 120 needs to have a bottleneck layer with a smaller dimensionality than the original wave form vector. The autoencoder model 120 should return an output that is identical to the input signal for a wide range of real-world speech inputs.

According to an embodiment of the present disclosure the process for creating a single pair of examples for the training data set comprises the steps:

    a) Randomly draw a high-quality example 410 from the clean speech data set 310;
    b) Randomly draw one or more algorithmic distortions from the data set 320 and apply these to the clean speech 410 to obtain the distorted speech 420, in particular one or more of:

        i. simulate room reverberation with a predefined probability,
        ii. apply equalization to the signal with a predefined probability,
        iii. apply band limiting to the signal with a predefined probability, and
        iv. simulate compression and transmission artifacts with a predefined probability;

    c) Randomly draw an example from the noise collection 320;
    d) Add the background noise to the clean speech sample whereby the loudness of each example is chosen at random in predefined limits to obtain the noisy distorted speech 430; and

e) define the noisy distorted speech 430 as ground truth 440.

Hence, the noisy distorted speech 430 is treated as ground truth 440. The loss is computed between the autoencoder output 450 and the ground truth data 440. Based on the value of the loss the parameters of the autoencoder model 120 are updated.

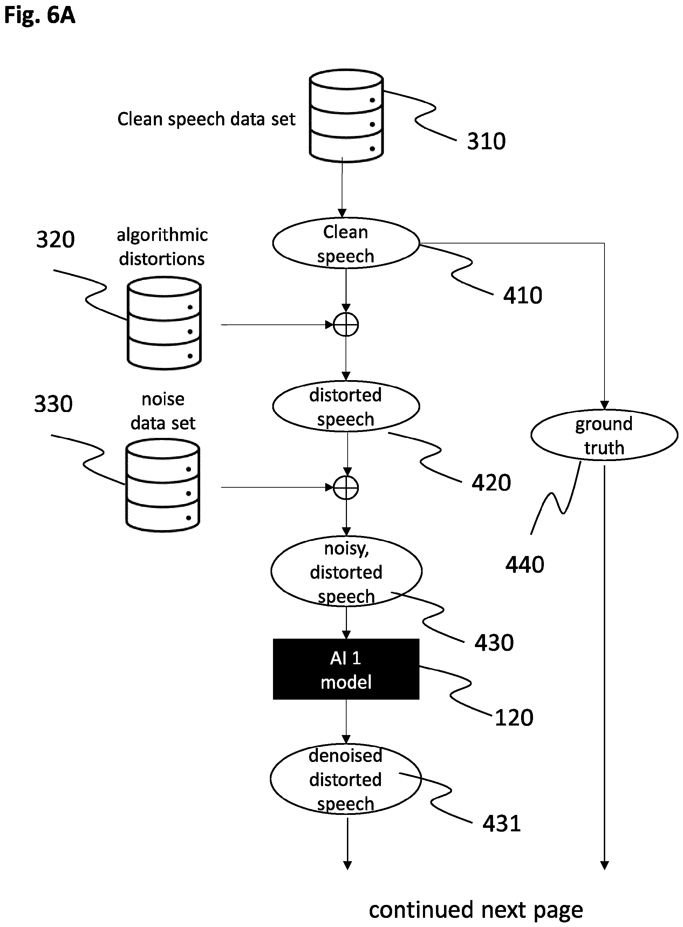

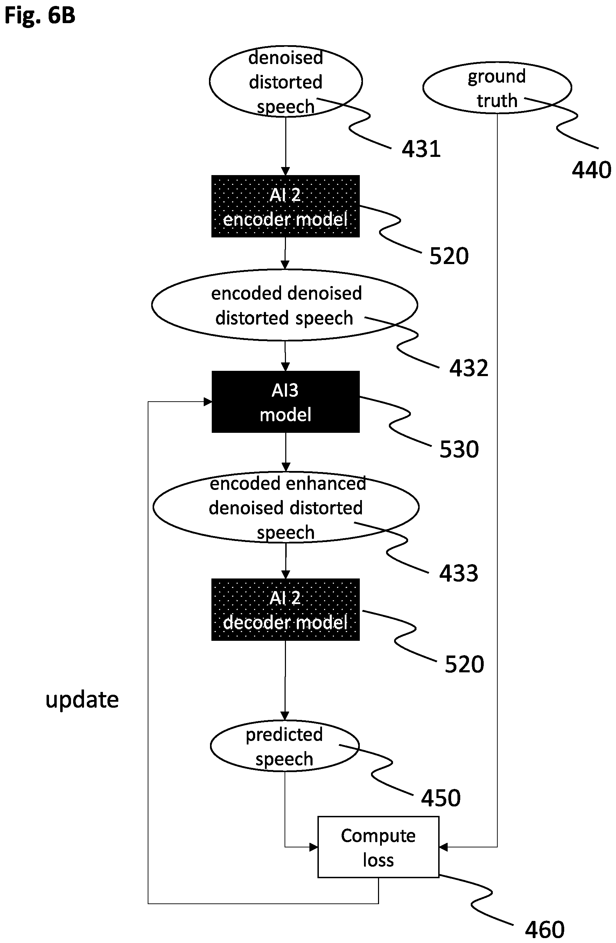

Figs. 6A and 6B depict the training process for the generative model 130 used to obtain the third trained AI 30 of the second stage.

According to the present disclosure the process for creating a single pair of examples for the training data set comprises the steps:

a) Randomly draw a high-quality example 410 from the clean speech data set 310;

b) Randomly draw one or more algorithmic distortions from the data set 320 and apply these to the clean speech 410 to obtain the distorted speech 420, in particular one or more of:

i. simulate room reverberation with a predefined probability,

ii. apply equalization to the signal with a predefined probability,

iii. apply band limiting to the signal with a predefined probability, and

iv. simulate compression and transmission artifacts with a predefined probability;

c) Randomly draw an example from the noise collection 320;

d) Add the background noise to the clean speech sample whereby the loudness of each example is chosen at random in predefined limits to obtain the noisy distorted speech 430; and

e) define the clean speech as ground truth 440

To train the generative model the original clean speech 410 is used as ground truth 440 and the model 130 is trained to predict the original clean speech 440.

However, before the distorted and noisy speech 430 is used as input to the generative model 130 it is passed through the trained subtractive model 120 of the first stage. The output 431 from the first stage is then used as the input to the trained encoder sub model 520 of the trained autoencoder.

Based on the embedding of the denoised audio 432, the generative model 530 predicts the embedding of the enhanced audio 433 which is then decoded to the wave form via the decoder sub model 520 of the trained autoencoder.

Then the loss is computed 460 between the decoded prediction 450 and the ground truth 440, and the parameters of the generative model 530 are updated.

The parameters of the subtractive model, the encoder sub-model, and the decoder sub-model are not updated.

Fig. 7 shows the position of the speech enhancement system according to the present disclosure in a signal processing chain. The physical sound 604 may comprise different components, e.g., room information 603, the human speaker 602 (which may have a distorted natural voice), and environment noise 601 (background noise).

The physical signal 604 is then recorded into a digital audio signal 701 with a microphone 700. The recoding characteristics of the microphone 700 further introduce distortions.

Additionally or alternatively, one or more of artifacts from compression 801; storage/transmission 802; and decompression 803 may be introduced to the input digital audio signal 1.

The stages 100, 200 according to the present disclosure output a digital waveform signal 5 that is close to the unobservable original speech signal. This enhanced digital signal 5 may then be passed on to a digital speaker or can be stored on a digital device.

One or more of the following modifications are possible in preferred embodiments:
The first stage neural network, i.e., the subtractive model, may preferably use both the noisy wave form and the noisy spectrogram as input to estimate the mask.

The first stage neural network, i.e., the subtractive model, may preferably operate on the waveform signal instead on the complex spectrogram. i.e., the estimated mask would be multiplied with the noisy waveform.

The encoder sub-model of the autoencoder could also use a short-time Fourier transform, STFT, based transformation as input instead of the waveform.

The decoder sub-model of the autoencoder could output a complex spectrogram which would then be transformed to the waveform using an inverse STFT.

The loss for training the generative model could also be computed between the enhanced embedding and the embedding of the ground truth.

An additional fine-tuning step in model training could be implemented. The parameters of all neural networks are updated according to the training configuration shown in Fig. 6A and 6B instead of only the parameters of the generative model.

Various modifications to the embodiments described are possible and will occur to those skilled in the art without departing from the disclosure which is defined by the following claims.

**Claims**

1. A method for speech enhancement of a digital audio signal,
   wherein the input digital audio signal is in a digital waveform representation, the method comprising the steps of:

a) based on a first trained artificial intelligence, AI, model creating a denoised digital audio signal in the waveform representation by removing energy from the input digital audio signal;
b) based on a second trained AI model mapping the denoised digital audio signal in the waveform representation into a lower dimensional signal representation;
c) based on a third trained AI model determining an enhanced digital audio signal in the lower dimensional signal representation such that the perceptual quality of the voice is elevated; and
d) based on the second trained AI model mapping the enhanced digital audio signal in the lower dimensional signal representation back to the waveform representation;
wherein each of the first, second, and third trained AI model is based on a respective AI model comprising a plurality of model parameters which are determined based on a training process.

2. The method according to claim 1, wherein the first AI model is a neural network based on a subtractive model configured to remove energy from the signal and preferably trained to remove unwanted noise.

3. The method according to claim 1,

wherein in step a) the waveform representation is converted to a complex spectrogram using several overlapping frames on which Fourier coefficients are computed;
wherein the complex spectrogram is input for the first trained AI model;
wherein the first trained AI model is configured to output a mask with the same dimensionality as the complex spectrogram;
wherein the mask is multiplied elementwise with the complex spectrogram to obtain a denoised complex spectrogram; and
wherein the denoised digital audio signal in the waveform representation is obtained by applying inverse Fourier transformations on the time frames of the denoised complex spectrogram.

4. The method according to claim 3, wherein the mask contains only values greater than 0 and smaller than 1.

5. The method according to any one of claims 1 to 4, wherein the second trained AI model is a neural network based on an autoencoder model comprising an encoding sub-model and a decoding sub-model and configured to be trained to encode the input into a lower dimensional output and decode a lower dimensional input to a higher dimensional output.

6. The method according to claim 5,

wherein in step b) according to claim 1 the denoised digital audio signal in the waveform representation is mapped to the lower dimensional representation via the encoder sub-model of the second trained AI; and
wherein in step d) according to claim 1 the enhanced digital audio signal in the waveform representation is obtained via the decoder sub-model of the second trained AI.

7. The method according to any one of claims 1 to 6, wherein the third trained AI model is a neural network based on a generative model and configured to add energy.

8. The method according to any one of claims 3 to 7, wherein the first AI model is configured to use both the waveform representation and the complex spectrogram as input to estimate the mask, and
wherein the mask is applied to the waveform representation or the complex spectrogram.

9. A method for training a first AI model for a method according to any one of claims 1 to 8;

wherein training data is generated based on a random combination of a clean speech data set, a noise data-set, and one or more algorithmic distortions configured to simulate real-world distortions;
wherein the ground truth data comprises the clean speech data with one or more algorithmic distortions;
wherein the neural network model is configured to calculate a prediction based on the clean speech with one or more algorithmic distortions and noise for the clean speech with one or more algorithmic distortions without noise; and
wherein the loss between the prediction and the ground truth is computed and model parameters are updated based on the value of the loss.

10. A method for training a second AI model for a method according to any one of claims 1 to 8;

wherein training data is generated based on a random combination of a clean speech data set, a noise data-set, and one or more algorithmic distortions configured to simulate real-world distortions;
wherein the neural network is based on an autoencoder model comprising an encoder sub-model and decoder sub-model and has a bottleneck layer with a lower dimensionality than the input digital audio signal in the waveform representation;

wherein ground truth data comprises clean speech, noise and one or more algorithmic distortions;

wherein the loss is computed between the autoencoder output and the ground truth data; and

wherein the model parameters of the encoder sub-model and the decoder sub-model are updated based on the value of the loss.

11. A method for training a third AI model for a method according to any one of claims 1 to 8;

wherein training data is generated based on a random combination of a clean speech data set, a noise data-set, and one or more algorithmic distortions configured to simulate real-world distortions;

wherein the ground truth comprises the clean speech data;

wherein before the training data is used as input to the third AI model , it is passed through a trained first AI model;

wherein the output of the first AI model is then used as the input to the encoder sub-model of the second trained AI model;

wherein based on the encoder sub-model output the third AI model is configured to calculate an enhanced digital audio signal, which is then decoded to the waveform representation via the decoder sub-model of the second trained AI model.

wherein the loss is computed between the decoded prediction and the ground truth, and the model parameters of the third AI model are updated based on the value of the loss.

12. A trained artificial intelligence, AI, model,

wherein the model parameters have been determined based on the steps of any one of claims 9 to 11 and/or,

wherein the trained AI model is configured to be one of a first, second, or third AI model according to any one of claims 1 to 8.

13. A data processing system comprising means for carrying out the steps of the method according to any one of claims 1 to 11.

14. A computer program comprising instructions which, when the program is executed by a computer, cause the computer to carry out the steps of the method according to any one of claims 1 to 11.

15. A computer-readable medium comprising instructions which, when executed by a computer, cause the computer to carry out the steps of the method according to any one of claims 1 to 11.

**Fig. 1A**

```
┌─────────────────────────────────────┐
│           audio signal              │  ⟋ 501
└─────────────────────────────────────┘
                  │
                  ▼
┌─────────────────────────────────────┐
│               STFT                  │  ⟋ 510
└─────────────────────────────────────┘
                  │
                  ▼
┌─────────────────────────────────────┐
│            spectrogram              │  ⟋ 502
└─────────────────────────────────────┘
         │        │
         │        ▼
         │   ┌──────────────┐
         │   │ Neural network│  ⟋ 520
         │   └──────────────┘
         │        │
         │        ▼
         │   ┌──────────────┐
         │   │     mask     │  ⟋ 521
         │   └──────────────┘
         │        │
         │        ▼
         └──────▶ ⊗  ⟋ 510
                  │
                  ▼
┌─────────────────────────────────────┐
│        denoised spectrogram         │  ⟋ 503
└─────────────────────────────────────┘
                  │
                  ▼
┌─────────────────────────────────────┐
│            inverse STFT             │  ⟋ 530
└─────────────────────────────────────┘
                  │
                  ▼
┌─────────────────────────────────────┐
│         denoised audio signal       │  ⟋ 504
└─────────────────────────────────────┘
```

**Fig. 1B**

**Fig. 1C**

| audio signal |
|:---:|

501

| AI |
|:---:|

550

| denoised audio signal |
|:---:|

504

**Fig. 2**

**Fig. 3**

**Fig. 4**

**Fig. 5**

**Fig. 6A**

Clean speech data set

310

320  algorithmic
distortions

Clean
speech

410

330  noise
data set

distorted
speech

420

ground
truth

440

noisy,
distorted
speech

430

**AI 1
model**

120

denoised
distorted
speech

431

continued next page

**Fig. 6B**

**Fig.7**

```
┌──────────────┐   ┌──────────────┐   ┌──────────────┐
│ environment  │   │   speaker    │   │     room     │
└──────────────┘   └──────────────┘   └──────────────┘
         └────601         │         602──┘      603
              └───────────⊕───────────┘
                          │
                          ▼
              ┌─────────────────────┐
              │   physical signal   │
              └─────────────────────┘          604
                          │
                          ▼
              ┌─────────────────────┐
              │     microphone      │
              └─────────────────────┘          700
                          │
                          ▼
              ┌─────────────────────┐
              │  digital audio signal │
              └─────────────────────┘          701
                          │
                          ▼
              ┌─────────────────────┐
              │   data compression  │
              └─────────────────────┘          801
                          │
                          ▼
              ┌─────────────────────┐
              │ storage/transmission│
              └─────────────────────┘          802
                          │
                          ▼
              ┌─────────────────────┐
              │  data decompression │
              └─────────────────────┘          803
                          │
                          ▼
              ┌─────────────────────┐
              │ digital audio signal │
              └─────────────────────┘          1
                          │
                          ▼
              ┌─────────────────────┐
              │       speech        │
              │    enhancement      │
              └─────────────────────┘          100, 200
                          │
                          ▼
              ┌─────────────────────┐
              │      enhanced       │
              │  digital audio signal │
              └─────────────────────┘          5
```

| | Europäisches Patentamt European Patent Office Office européen des brevets | **EUROPEAN SEARCH REPORT** | Application Number EP 23 18 0108 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/162758 A1 (BORGSTROM BENGT J [US] ET AL) 25 May 2023 (2023-05-25) * figures 1b, 2a, 2b, 4b * * paragraphs [0068], [0102] * ----- | 1-15 | INV. G10L25/30 G06N3/0455 G10L21/0208 |
| A | US 10 511 908 B1 (FISHER MATTHEW [US]) 17 December 2019 (2019-12-17) * page 4 - page 5; figures 2,6,7 * ----- | 7 | |
| A | HAOHE LIU ET AL: "VoiceFixer: Toward General Speech Restoration With Neural Vocoder", ARXIV.ORG, CORNELL UNIVERSITY LIBRARY, 201 OLIN LIBRARY CORNELL UNIVERSITY ITHACA, NY 14853, 4 October 2021 (2021-10-04), XP091071209, * Section 3.2.2 Synthesis Stage and Figure 4; page 5 - page 5; figure 4 * ----- | 7 | |
| | | | **TECHNICAL FIELDS SEARCHED (IPC)** G10L G06N |

The present search report has been drawn up for all claims

| Place of search | Date of completion of the search | Examiner |
|---|---|---|
| The Hague | 13 November 2023 | Stan, Guy-Bart |

EPO FORM 1503 03.82 (P04C01)

## ANNEX TO THE EUROPEAN SEARCH REPORT
## ON EUROPEAN PATENT APPLICATION NO.

EP 23 18 0108

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2023

| Patent document cited in search report | Publication date | Patent family member(s) | Publication date |
|---|---|---|---|
| US 2023162758 A1 | 25-05-2023 | NONE | |
| US 10511908 B1 | 17-12-2019 | NONE | |

EPO FORM P0459

For more details about this annex : see Official Journal of the European Patent Office, No. 12/82